# EUROPÄISCHE PATENTSCHRIFT

(11) **EP 0 985 115 B1**
(45) Veröffentlichungstag und Bekanntmachung des Hinweises auf die Patenterteilung: **11.07.2001**
(21) Anmeldenummer: 98929291.7
(22) Anmeldetag: 09.05.1998
(51) Int. Cl.: F16L 51/03, F16L 51/02

(54) **AXIALKOMPENSATOR**
AXIAL COMPENSATOR
COMPENSATEUR AXIAL

(30) Priorität: 31.05.1997 DE 19722967
(43) Veröffentlichungstag der Anmeldung: 15.03.2000
(73) Patentinhaber: Rattay, Hans, 46569 Hünxe (DE)
(72) Erfinder: Rattay, Hans, 46569 Hünxe (DE)
(74) Vertreter: Hallermann, Dietrich-Otto, Dipl.-Ing. Patentassessor
(86) Internationale Anmeldenummer: EP9802719
(87) Internationale Veröffentlichungsnummer: WO9854507

(56) Entgegenhaltungen:
- EP-A- 0 108 829
- DE-C- 530 179
- DE-U- 8 632 567
- GB-A- 1 531 792

## Beschreibung

Die Erfindung betrifft einen Axial-Kompensator, für zum Transport von gasförmigen und flüssigen Medien geeigneten Rohrleitungen, der im wesentlichen aus mindestens einem zwischen zwei als Anschweißenden ausgebildeten Rohrleitungsstutzen angeordneten Wellrchrkompensator und mit dem Rohrleitungsstutzen verbindenden, ineinanderschiebbaren, inneren, rohrartigen, miteinander korrespondierenden Führungen besteht

Bei der Kompensation von axial wirkenden Rohrdehnungen werden in die Rohrleitungen sogenannte Axial-Kompensatoren eingebaut. Bekannt sind unter anderem Stopfbuchsdehnungs-Ausgleicher, die aufgrund ihrer Bauweise geeignet sind zur Aufnahme großer Längenänderungen, die aber gleichzeitig eine überaus schlechte Abdichtung mit sich bringen und die insbesondere aufgrund der zu überwindenden Reibung erst bei sehr großen Verstellkräften reagieren.

Bei kleineren Axialbewegungen werden auch Wellrohrkompensatoren ohne jegliche Innenführung eingesetzt. Derartige Kompensatoren bergen jedoch die stets mögliche Gefahr, daß durch mangelnde Führung und Einleitung der auftretenden Kräfte die Kompensatoren ausknicken.

Des weiteren sind Wellrohrkompensatoren mit Innenführungen bekannt, bei denen mit dem Anschweißende verbundene und einander überlappende Rohre innerhalb der Rohrleitung und innerhalb des Wellrohrkompensators eine Führung zur Aufnahme axialer Kräfte bilden. Der wesentliche Nachteil von Kompensatoren mit Innenführung liegt darin, daß die Führungen den Ein- oder Ausschiebeweg nicht begrenzen und somit vornehmlich bei großen Drücken und entsprechenden Bewegungen die Zerstörung der Wellrohrkompensatoren durch Überdehnung verursachen. Ein solcher Nachteil kann nur mit Hilfe aufwendiger äußerer, den Wellrohrkompensator umgebende Konstruktionen vermieden werden.

Nach der GB-A 1531792 ist ein Wellrohrkompensator mit der oben beschriebenen Innenführung bekannt, bei dem mit dem Anschweißende verbundene und einander überlappende Führungsrohre eine Führung bilden. Zur Begrenzung der Verschiebeweglänge ist ein äußeres Schutzgehäuse mit einem Gleitring vorgesehen, der mit in Schlitzen geführten Bolzen versehen ist. Es ist bei einer solchen Konstruktion neben einer Innenführung eine äußerst aufwendige Außenführung zur Begrenzung des Verschiebeweges erforderlich.

In dem DE-U-8632567 sind verschiedene Ausführungen von Axial-Kompensatoren beschrieben, wobei es darum geht, die erforderliche Längenbegrenzung mit dem Innenschutzrohr zu verbinden. Eine am freien Ende des Innenschutzrohres angeordnete radiale Aufweitung kann sich in einer jeweils dafür vorgesehenen Querschnittsänderungen in Grenzen bewegen.

Abgesehen von einem jeweils hohen Konstruktionsaufwand weisen derartige Wellrohrkompensatoren den Nachteil auf, daß sie keine großen Kräfte aufnehmen können und nicht geeignet sind für hohe Drücke.

Die EP-A-108829 zeigt einen Axial-Kompensator mit mindestens einem Metallbalg, dessen Enden mit jeweils einem Rohrstück verbunden sind. Die Enden beider Rohrstücke weisen axial ausgerichtete Formausbildungen in Form von Formansätzen und damit zusammenarbeitenden Formausnehmungen auf. Um den erforderlichen Verschiebeweg der Formansätze innerhalb der Formausnehmungen zu ermöglichen, ist eine äußerst aufwendige Fertigung der Rohrenden und eine komplizierte Montage unumgänglich. Da die symmetrisch oder über den gesamten Umfang an den Rohrenden vorgesehenen Formausbildungen nicht ineinanderschiebbar oder auch -steckbar verbunden werden können, muß zwangsläufig auf eine vollständige Vorfertigung verzichtet werden und eine aufwendige Montage muß vor Ort vorgenommen werden. Die Wirkung der miteinander korrespondierenden Formausbildungen kann erst dann eintreten, wenn die Formausbildungen ineinandergelegt und mit den Rohrenden verschweißt sind. Die Formausbildungen bilden dann nur eine Führung, die in der Rohrwand liegt und die dadurch bedingt, keine sichere Führung bildet.

Der Erfindung liegt die Aufgabe zugrunde, einen Axial-Kompensator zu schaffen, der bei hohen Drücken und großen axialen Bewegungen eingesetzt werden kann, der eine einfache und kostengünstige Bauweise gewährleistet und der darüber hinaus zur Entlastung der Rohrleitung bereits bei kleinen Übertragungskräften genau definierte axiale Bewegungen erlaubt.

Diese Aufgabe wird erfindungsgemäß dadurch gelöst, daß die ineinander verschiebbaren Führungen endseitig mit mindestens zwei sich radial einander gegenüberliegenden flanschartigen Distanznasen versehen sind, wobei die Distanznasen einen kleineren Umfangswinkel als die zwischen den Distanznasen vorgesehenen Öffnungen aufweisen, und die entsprechend ihrem Umfangswinkel durch Verdrehen in ihre Endposition gebrachten Distanznasen
den Verschiebeweg exakt begrenzen. Abgesehen von dem Einsatz eines Kompensators mit einem Wellrohrschlauch erlaubt die Erfindung die Hintereinanderschaltung mehrerer Wellrohrkompensatoren zur Aufnahme großer Bewegungen, wobei die Kräfte durch die unterschiedlichen Eingriffe der jedem Wellrohrkompensator zugeordneten Führungen nacheinander in den Kompensator eingeleitet werden. Dabei reduzieren sich die Verstellkräfte in dem Maß, indem die Bewegungen nur von den in Eingriff stehenden Wellrohrkompensatoren übernommen werden. Es ergibt sich eine Entlastung der Rohrleitung.

Der besondere Vorteil der Führung liegt darin, daß axiale Kräfte aufgenommen und gleichzeitig die Führungen mit Verschiebewegbegrenzungen versehen sind. Derartige Führungen mit Begrenzungen könnten überall dort, wo z.B. durch Temperaturänderungen Längenänderungen auftreten, zur Bewegungsaufnahme eingesetzt werden.

Besondere Ausführungen der die Führungen aufnehmenden Leitungs- oder Rohrelemente sind dann erforderlich, wenn mehrere Wellrohrkompensatoren zur Aufnahme großer Verschiebewege eingesetzt werden sollen. Neben den Rohrleitungsstutzen, die an die Rohrleitungen angeschweißt werden, müssen Zwischenelemente in Form von Leitungs- oder Rohrelementen vorhanden sein, die Führungen nach beiden Seiten aufweisen und die gleichzeitig als Anschweißenden zur Verbindung mit den einzelnen Wellrohrkompensatoren ausgebildet sind. Die ineinandergreifenden, teilweise über- oder untergreifenden Führungen müssen'jeweils Distanznasen aufweisen, die durch ihre Korrespondenz den Verschiebeweg begrenzen. Eine größere Anzahl von auf oder unter den Führungen aufgebrachten flanschartigen Distanznasen verbessert die axiale Übertragung der Kräfte. Um beim Anpassen der ineinandergreifenden und gegeneinander verschiebbaren Führungen bei Zug oder Druck die volle Übertragung gewährleisten zu können, ist es von Vorteil, nach den Anpassen und Verdrehen der Führungen gegeneinander, zusätzlich Anschlagbegrenzungen einzusetzen. Des weiteren ist es möglich, jeden Wellrohrkompensator oder auch mehrere hintereinandergeschaltete Kompensatoren mit einem Schutzgehäuse und eventuell auch mit Meßgeräten zu versehen. Darüber hinaus ist es zweckmäßig, die miteinander korrespondierenden Führungen mit Dichtelementen, z.B. einem O-Ring zu versehen.

Ein Ausführungsbeispiel der Erfindung ist in den Zeichnungen dargestellt und wird im nachfolgenden näher erläutert. Es zeigen:
- Figur 1: ein Ausführungsbeispiel eines Axial-Kompensators im Schnitt,
- Figur 2: ein Ausführungsbeispiel für ein übergreifendes Führungselement,
- Figur 3: ein Ausführungsbeispiel für ein untergreifendes Führungelement und
- Figur 4: ein weiteres Ausführungsbeispiel eines Axial-Kompensators mit mehreren Wellrohrkompensatoren und großem Verschiebeweg.

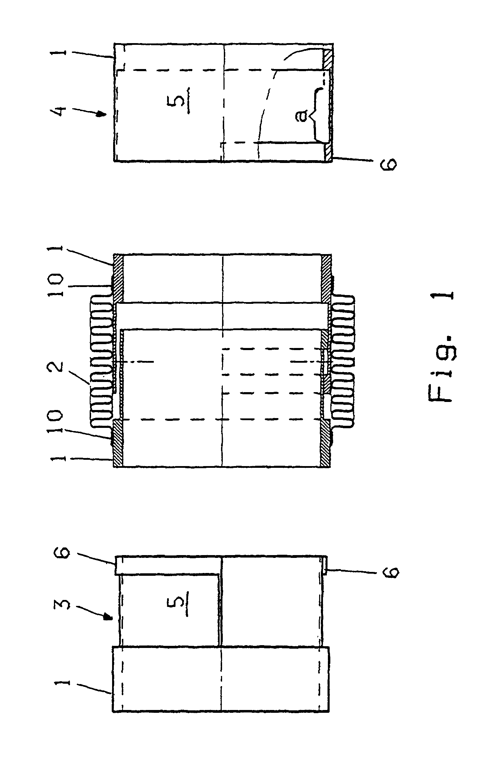

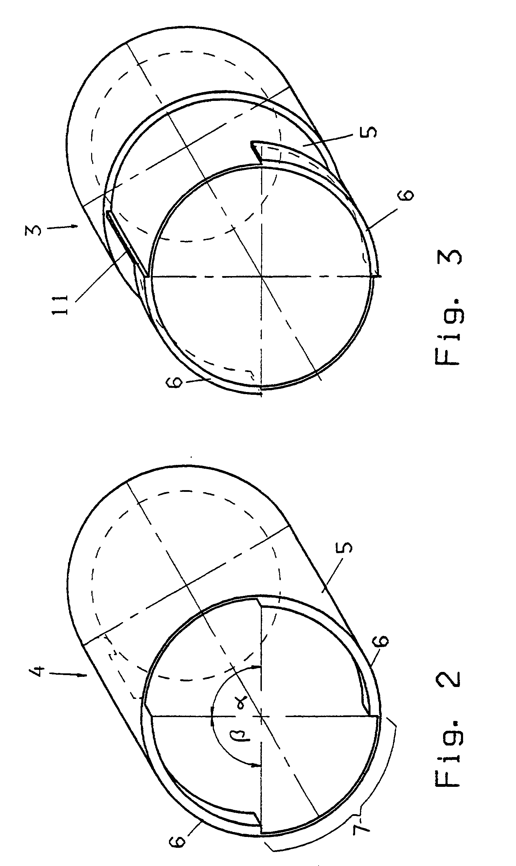

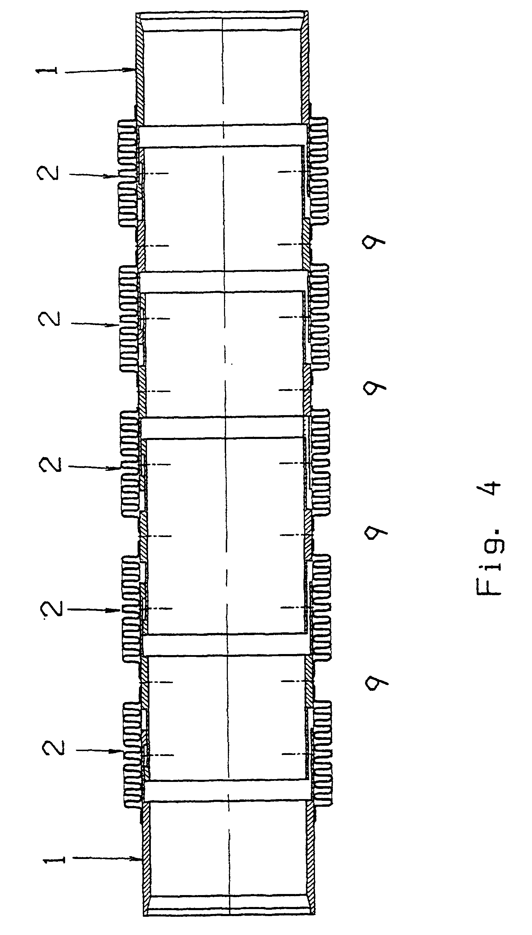

In Figur 1 ist die einfache Ausführung für einen Axial-Kompensator im Schnitt in Verbindung mit den korrespondierenden Führungen 3, 4 dargestellt. Der Kompensator besteht im wesentlichen aus einem zwischen zwei als Anschweißenden 1 ausgebildeten Rohrleitungsstutzen angeordneten Wellrohrkompensator 2. Zum Verbinden des Wellrohrkompensators mit den Anschweißenden 1 sind auf diesem entsprechende Ringe 10 aufgeschweißt. Die als Führungen 3,4 bezeichneten Rohrelemente weisen neben den Anschweißenden gegeneinander unter- bzw. übergreifende Rohr 5 auf, an deren Enden flanschartige Distanznasen 6 angeordnet sind. Die Distanznasen 6 sind bei dem untergreifenden Führungselement 3 auf der Außenseite und bei dem übergreifenden Führungselement 4 auf der Innenseite angebracht. Die Distanznasen 6 sind, wie in den Figuren 3 und 4 besser verdeutlicht ist, einander gegenüberliegend mit dem Rohr 5 verbunden, wobei die zwischen den Distanznasen 6 vorgesehenen Öffnungen 7 jeweils einen etwas größeren Umfangswinkel aufweisen als die Distanznase 6, die einen Umfangswinkel β aufweisen. Die Anzahl der Distanznasen 6, die jeweils diametral gegenüberliegend auf dem Rohr 5 anzuordnen sind, kann beliebig gewählt werden, wobei mit der Vielzahl die axiale Stabilität wächst.

Zur Herstellung eines Kompensators wird das untergreifende Führungselement 4 in das übergreifende Führungselement 3 eingeführt und soweit gegeneinander verdreht, bis die Distanznase 6 des übergreifende Führungselementes 4 gegen den Anschlag 11 stößt. Die Länge des Verschiebeweges a ist in Figur 1 (rechte Bildhälfte) dargestellt. Der Verschiebeweg a wird bei Druck und Zug durch die Distanznasen 6 der korrespondierenden Führungselemente 3, 4 begrenzt. In Figur 4 ist ein weiteres Ausführungsbeispiel eines Axial-Kompensators im Schnitt dargestellt, der aus beispielsweise fünf Wellrohrkompensatoren 2 besteht und geeignet ist, große Verschiebewege bei Längenänderungen aufzunehmen. Dabei müssen bis auf die mit den Anschweißenden 1 verbundenen Führungselemente 3, 4 Leitungselemente oder Rohrabschnitte 9 verwendet werden, die zum einen die Befestigung der Wellrohrkompensatoren 2 als auch eine beidseitige Führung in untergreifender oder übergreifender Form ermöglichen. Dabei ist das Prinzip der die Verschiebewege a begrenzenden Distanznasen 6 in der gleichen Form berücksichtigt.

Durch die Möglichkeit der Anordnung einer unterschiedlichen Anzahl von Wellrohrkompensatoren kann der Kompensator auf die erforderliche Längenänderung der Rohrleitung abgestimmt werden.

Der besondere Vorteil einer derartigen Ausführung liegt in der Reduzierung der Verstellkräfte, wodurch die Rohrleitung in nicht unbeträchtlichem Maße entlastet wird.

Die erwähnten Schutzgehäuse können die Kompensatoren von außen umgebend als äußere Führung verwendet werden und schützen gleichzeitig den Kompensator vor Verschmutzungen.

### Bezugszeichenliste

- 1: Anschweißenden
- 2: Wellrohrkompensator
- 3: Führung
- 4: Führung
- 5: Rohr
- 6: Distanznasen
- 7: Öffnung
- 8: Verschiebeweg
- 9: Leitungselemente
- 10: aufgeschweißte Ringe
- 11: Anschlag
- a: Verschiebeweg

## Patentansprüche

1. Axial-Kompensator für zum Transport von gasförmigen und flüssigen Medien geeigneten Rchrleitungen, der im wesentlichen aus mindestens einem zwischen zwei als Anschweißenden (1) ausgebildeten Rohrleitungsstutzen angeordneten Wellrohrkompensator (2) und mit dem Rohrleitungsstutzen verbindenden, ineinanderschiebbaren, inneren, rchrartigen, miteinander korrespondierenden Führungen (3, 4) besteht, dadurch gekennzeichnet, daß die ineinander verschiebbaren Führungen (3, 4) jeweils endseitig mit mindestens zwei radial sich erstreckenden, einander gegenüberliegenden flanschartigen Distanznasen (6) versehen sind, wobei die Distanznasen (6) einen kleineren Umfangswinkel (β) als die zwischen den Distanznasen (6) vorgesehenen Öffnungen (7) aufweisen, und daß die entsprechend ihrem Umfangswinkel (β) durch Verdrehen in ihre Endposition gebrachten Distanznasen (6) den Verschiebeweg (a) begrenzen.

2. Axial-Kompensator nach Anspruch 1, dadurch gekennzeichnet, daß die Führungen (3, 4) endseitig eine Vielzahl von über den Umfang gleichmäßig verteilter Distanznasen (6) mit entsprechenden dazwischen liegenden Öffnungen (7) aufweisen.

3. Axial-Kompensator nach Anspruch 1, **dadurch gekennzeichnet,** daß der Wellrohrkompensator von einem Schutzgehäuse umgeben ist.

4. Axial-Kompensator nach Anspruch 1, **dadurch gekennzeichnet,** daß zwischen zwei Rohrleitungsenden (1) mehrere hintereinander angeordnete Wellrohrkompensatoren (2) vorgesehen sind, wobei jedem Wellrohrkompensator (2) ineinander verschiebbare, flanschartige Distanznasen (6) aufweisende Führungen (3, 4; 9) angeordnet sind.

5. Axial-Kompensator nach Anspruch 4, **dadurch gekennzeichnet,** daß bei Anordnung mehrerer Wellrohrkompensatoren (2) hintereinander die nach beiden Seiten mit einerseits übergreifenden und andererseits untergreifenden Führungen (3, 4) versehenen rohrartigen Leitungselemente (9) als Anschweißenden zur Befestigung der Wellrohrkompensatoren ausgebildet sind.

6. Axial-Kompensator nach den vorangehenden Ansprüchen, **dadurch gekennzeichnet,** daß die Führungen (3, 4) mit einem die Drehung begrenzenden Anschlag (11) versehen sind.

## Claims

1. An axial expansion joint for pipelines suitable for conveying gaseous and fluid media, which axial expansion joint is composed substantially of at least one bellows expansion joint (2) arranged between two pipeline connection. pieces in the form of weld-on ends (1), and of mutually corresponding, inner, pipe-like telescoping guides (3, 4) which connect to the pipeline connection piece, characterised in that the guides (3, 4) displaceable in one another are each provided at the end with at least two radially extending, facing, flange-like distance projections (6), the distance projections (6) having a smaller circumferential angle (β) than the gaps (7) provided between the distance projections (6), and in that the distance projections (6) brought into their final position through rotation according to their circumferential angle (β) limit the displacement path (a).

2. An axial expansion joint according to Claim 1, characterised in that the guides (3, 4) have, at the end, a plurality of distance projections (6) which are distributed uniformly over the circumference and which have corresponding gaps (7) lying between them.

3. An axial expansion joint according to Claim 1, characterised in that the bellows expansion joint is surrounded by a protective housing.

4. An axial expansion joint according to Claim 1, characterised in that a plurality of bellows expansion joints (2) arranged one behind the other are provided between two pipeline ends (1), guides (3, 4; 9) which have flange-like distance projections (6) and which are displaceable in one another being associated¹ with each bellows expansion joint (2).

5. An axial expansion joint according to Claim 4, characterised in that when a plurality of bellows expansion joints (2) are arranged one behind the other, the tubular piping elements (9) provided to either end with, at the one end, over-engaging and, at the other end, under-engaging guides (3, 4) are in the form of weld-on ends to secure the bellows expansion joints.

6. An axial expansion joint according to the preceding Claims, characterised in that the guides (3, 4) are provided with a stop (11) limiting rotation.

## Revendications

1. Compensateur axial pour canalisation apte au transport de milieux gazeux ou liquides, ledit compensateur étant composé essentiellement d'au moins un compensateur (2) à tube ondulé disposé entre deux canalisations de rallonge formées comme extrémité soudée et avec des guides (3,4) correspondants intérieurs coulissables l'un dans l'autre sous forme de tuyaux mettant en communication les canalisations de rallonge, caractérisé en ce que les guides (3,4) coulissables sont munis chacun à son extrémité d'au moins deux butoirs d'écartement (6) opposés sous forme de flasque s'étendant en direction radiale, les butoirs d'écartement (6) ayant un angle périphérique (β) plus petit que l'ouverture (7) prévue entre les butoirs d'écartement (6), et que les butoirs d'écartement, déplacés dans leur position finale par rotation d'un angle correspondant à leur angle périphérique (β), définissent le chemin de déplacement (a).

2. Compensateur axial selon la revendication 1, caractérisé en ce que les guides (3,4) sont pourvus à leur extrémité d'une pluralité de butoirs d'écartement (6) distribués uniformément sur leur périphérie avec des ouvertures (7) correspondantes entre les butoirs.

3. Compensateur axial selon la revendication 1, caractérisé en ce que le compensateur à tube ondulé est entouré d'un boîtier de protection.

4. Compensateur axial selon la revendication 1, caractérisé en ce que plusieurs compensateurs à tube ondulé (2) disposés l'un derrière l'autre sont prévus entre deux extrémités de canalisation (1), des guides (3,4;9) coulissables pourvus de butoirs d'écartement (6) en forme de flasque étant arrangés dans chaque compensateur à tube ondulé.

5. Compensateur axial selon la revendication 4, caractérisé en ce que lors de l'arrangement de plusieurs compensateurs à tube ondulé (2) l'un derrière l'autre, les éléments de canalisation (9) en forme de tube sont pourvus les uns de guides (3,4) s'étendant par-dessus et les autres de guides soujacents sont conçus les deux côtés comme extrémité soudée pour fixer les compensateurs à tube ondulé.

6. Compensateur axial selon les revendications précédentes, caractérisé en ce que les guides (3,4) sont pourvus d'un arrêt (11) limitant la rotation.
